# EUROPEAN PATENT APPLICATION

(11) **EP 4 693 873 A1**
(43) Date of publication of application: **11.02.2026**
(21) Application number: 23930167.4
(22) Date of filing: 29.03.2023
(51) Int. Cl.: H02M 7/12

(54) **POWER CONVERSION DEVICE**

(71) Applicant: Nissan Motor Co., Ltd., Kanagawa 220-8623 (JP); Renault s.a.s, 92100 Boulogne Billancourt (FR)
(72) Inventor: IKARI, Takayuki, Atsugi-shi, Kanagawa 243-0123 (JP); YAMAGAMI, Shigeharu, Atsugi-shi, Kanagawa 243-0123 (JP); LOVISON, Giorgio, Atsugi-shi, Kanagawa 243-0123 (JP); KUWABARA, Yoshikazu, Atsugi-shi, Kanagawa 243-0123 (JP)
(74) Representative: Hoefer & Partner Patentanwälte mbB
(86) International application number: PCT/IB2023/000171
(87) International publication number: WO 2024/201093

(57) **Abstract**

In a power conversion device (10), a bidirectional switch (21) of an inverter circuit (20) including an LC resonance circuit (22) switches a direction and an on/off state of a current flowing between a pair of input terminals (IN1, IN2). The inverter circuit (20) generates a high-frequency AC current from AC power input to the pair of input terminals (IN1, IN2). The inverter circuit (20) includes a shunt capacitor (C2) that is connected between the pair of input terminals (IN1, IN2) in parallel to the bidirectional switch (21), and a choke inductor that is connected between the bidirectional switch (21) and at least one input terminal of the pair of input terminals (IN1, IN2). A control unit (40) changes an on-duty of a switching operation of the bidirectional switch (21) according to a polarity of a voltage of the AC power input to the pair of input terminals (IN1, IN2).

## Description

### TECHNICAL FIELD

The present invention relates to a power conversion device.

### BACKGROUND ART

Patent Literature 1 discloses a power conversion circuit in which a class-E inverter circuit having an LC resonance circuit converts AC input power into a high-frequency AC current, and a rectifier circuit rectifies the current and outputs a rectified current to a load. In the power conversion circuit disclosed in Patent Literature 1, Zero Voltage Switching (ZVS) is achieved by changing a switching frequency of a switching element of the class-E inverter circuit based on an input voltage of the power conversion circuit.

### CITATION LIST

### PATENT LITERATURE

Patent Literature 1: JP 2021-145433 A

### SUMMARY OF INVENTION

### PROBLEMS TO BE SOLVED BY INVENTION

An object of the present invention is to further reduce switching loss in an inverter circuit including an LC resonance circuit, such as that in the power conversion circuit disclosed in Patent Literature 1.

### SOLUTION TO SOLVE PROBLEMS

In order to solve the issue described above, in a power conversion device according to one aspect of the present invention, a bidirectional switch of an inverter circuit including an LC resonance circuit switches the direction and the on/off state of a current flowing between a pair of input terminals. The inverter circuit generates a high-frequency AC current from AC power input to the pair of input terminals. The inverter circuit includes a shunt capacitor that is connected between the pair of input terminals in parallel to the bidirectional switch, and a choke inductor that is connected between the bidirectional switch and at least one input terminal of the pair of input terminals. A control unit changes an on-duty of a switching operation of the bidirectional switch according to the polarity of a voltage of the AC power input to the pair of input terminals.

### EFFECTS OF INVENTION

According to the present invention, it is possible to further reduce switching loss in an inverter circuit including an LC resonance circuit.

### BRIEF DESCRIPTION OF DRAWINGS

[FIG. 1] FIG. 1 is a diagram showing the configuration of a power conversion device according to a first embodiment of the present invention.
[FIG. 2] FIG. 2 is a diagram showing the relationship between a control signal for switching a switching element of an inverter circuit, and a waveform of a resonance current generated in a resonance circuit of the inverter circuit by switching the switching element, when an input voltage of the power conversion device shown in FIG. 1 is positive.
[FIG. 3] FIG. 3 is a diagram showing the relationship between a control signal for switching the switching element of the inverter circuit, and a waveform of a resonance current generated in the resonance circuit of the inverter circuit by switching the switching element, when an input voltage of the power conversion device shown in FIG. 1 is negative.
[FIG. 4] FIG. 4 is a diagram showing the relationship between an input current and input power of the power conversion device shown in FIG. 1, controlled to have a waveform with high power factor and low total harmonic distortion, relative to a waveform of an input voltage of the power conversion device, when the power conversion device operates at an average power of 3.5 kW, which is the maximum rated condition.
[FIG. 5] FIG. 5 is a diagram showing the combination of a switching frequency and on-duty to be selected by the switching element of the inverter circuit, when an input voltage instantaneous value of the power conversion device shown in FIG. 1 is plus 50 V.
[FIG. 6] FIG. 6 is a diagram showing the combination of a switching frequency and on-duty to be selected by the switching element of the inverter circuit, when an input voltage instantaneous value of the power conversion device shown in FIG. 1 is plus 100 V.
[FIG. 7] FIG. 7 is a diagram showing the combination of a switching frequency and on-duty to be selected by the switching element of the inverter circuit, when an input voltage instantaneous value of the power conversion device shown in FIG. 1 is plus 150 V.
[FIG. 8] FIG. 8 is a diagram showing the combination of a switching frequency and on-duty to be selected by the switching element of the inverter circuit, when an input voltage instantaneous value of the power conversion device shown in FIG. 1 is plus 200 V.
[FIG. 9] FIG. 9 is a diagram showing the combination of a switching frequency and on-duty to be selected by the switching element of the inverter circuit, when an input voltage instantaneous value of the power conversion device shown in FIG. 1 is plus 250 V.
[FIG. 10] FIG. 10 is a diagram showing the combination of a switching frequency and on-duty to be selected by the switching element of the inverter circuit, when an input voltage instantaneous value of the power conversion device shown in FIG. 1 is plus 283 V.
[FIG. 11] FIG. 11 is a diagram in which a ZVS established range of the on-duty of the switching element is compared among positive input voltage instantaneous values of the power conversion device shown in FIG. 1, when the average input power of the power conversion device is 3.5 kW.
[FIG. 12] FIG. 12 is a diagram in which a ZVS established range of the on-duty of the switching element is compared among positive input voltage instantaneous values of the power conversion device shown in FIG. 1, when the average input power of the power conversion device is 1.0 kW.
[FIG. 13] FIG. 13 is a diagram showing the combination of a switching frequency and on-duty to be selected by the switching element of the inverter circuit, when an input voltage instantaneous value of the power conversion device shown in FIG. 1 is minus 50 V.
[FIG. 14] FIG. 14 is a diagram showing the combination of a switching frequency and on-duty to be selected by the switching element of the inverter circuit, when an input voltage instantaneous value of the power conversion device shown in FIG. 1 is minus 100 V.
[FIG. 15] FIG. 15 is a diagram showing the combination of a switching frequency and on-duty to be selected by the switching element of the inverter circuit, when an input voltage instantaneous value of the power conversion device shown in FIG. 1 is minus 150 V.
[FIG. 16] FIG. 16 is a diagram showing the combination of a switching frequency and on-duty to be selected by the switching element of the inverter circuit, when an input voltage instantaneous value of the power conversion device shown in FIG. 1 is minus 200 V.
[FIG. 17] FIG. 17 is a diagram showing the combination of a switching frequency and on-duty to be selected by the switching element of the inverter circuit, when an input voltage instantaneous value of the power conversion device shown in FIG. 1 is minus 250 V.
[FIG. 18] FIG. 18 is a diagram showing the combination of a switching frequency and on-duty to be selected by the switching element of the inverter circuit, when an input voltage instantaneous value of the power conversion device shown in FIG. 1 is minus 283 V.
[FIG. 19] FIG. 19 is a diagram in which a ZVS established range of the on-duty of the switching element is compared among negative input voltage instantaneous values of the power conversion device shown in FIG. 1, when the average input power of the power conversion device is 3.5 kW.
[FIG. 20] FIG. 20 is a diagram in which a ZVS established range of the on-duty of the switching element is compared among negative input voltage instantaneous values of the power conversion device shown in FIG. 1, when the average input power of the power conversion device is 1.0 kW.
[FIG. 21] FIG. 21 is a flowchart showing an example of a processing procedure performed by an on-duty operation unit shown in FIG. 1.
[FIG. 22] FIG. 22 is a diagram showing the configuration of a power conversion device according to a second embodiment of the present invention.
[FIG. 23] FIG. 23 is a flowchart showing an example of a processing procedure performed by an on-duty operation unit shown in FIG. 22.
[FIG. 24] FIG. 24 is a diagram showing the configuration of a power conversion device according to a third embodiment of the present invention.
[FIG. 25] FIG. 25 is a diagram showing the configuration of a power conversion device according to a fourth embodiment of the present invention.

### DESCRIPTION OF EMBODIMENTS

Embodiments of the present invention and modified examples thereof will be described below with reference to the drawings. In the description of the drawings, the same parts are denoted by the same reference numerals and description thereof is omitted.

### (First embodiment)

### (Configuration of power conversion device according to first embodiment)

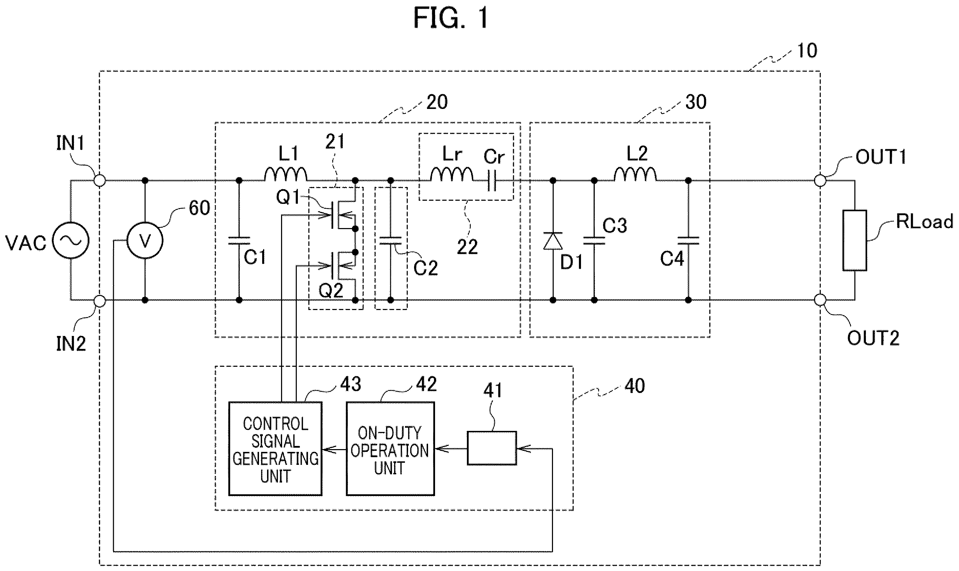

FIG. 1 shows the configuration of a power conversion device according to a first embodiment of the present invention. A power conversion device 10 shown in FIG. 1 includes a pair of a first input terminal IN1 and a second input terminal IN2, an inverter circuit 20, a rectifier circuit 30, a pair of a first output terminal OUT1 and a second output terminal OUT2, a control unit 40, and an input voltmeter 60. An AC power supply AC is connected between the first input terminal IN1 and the second input terminal IN2, and a DC load RLoad as a load is connected between the first output terminal OUT1 and the second output terminal OUT2. In the present embodiment, the AC power supply AC with an effective value of 200 V and 50 Hz is connected between the first input terminal IN1 and the second input terminal IN2. The polarity of an input voltage of the power conversion device 10 is switched between positive and negative by AC power of the AC power supply AC input between the first input terminal IN1 and the second input terminal IN2. The input voltmeter 60 is connected between the first input terminal IN1 and the second input terminal IN2. The input voltmeter 60 measures the input voltage of the power conversion device 10.

The inverter circuit 20 includes a smoothing capacitor C1, a choke inductor L1, a switching element 21, a shunt capacitor C2, and an LC resonance circuit 22. The smoothing capacitor C1 is connected between the first input terminal IN1 and the second input terminal IN2. A circuit in which the choke inductor L1 and the switching element 21 are connected in series, is connected in parallel to a connection point between the first input terminal IN1 and the smoothing capacitor C1. The shunt capacitor C2 is connected in parallel to the switching element 21. In consideration of the symmetry of the inverter circuit 20, a choke inductor L1 may be further disposed between the second input terminal IN2 and the shunt capacitor C2, in addition to the choke inductor L1 disposed between the first input terminal IN1 and the shunt capacitor C2. In the following description, as shown in FIG. 1, it is assumed that the choke inductor L1 is disposed only between the first input terminal IN1 and the shunt capacitor C2.

The LC resonance circuit 22 is a circuit in which a resonance inductor Lr and a resonance capacitor Cr are connected in series. The resonance inductor Lr is connected to a connection point between the choke inductor L1 and the switching element 21. The inverter circuit 20 supplies a high-frequency resonance current, generated in the LC resonance circuit 22 by the switching performed by the switching element 21, to the rectifier circuit 30, and then the rectifier circuit 30 rectifies the high-frequency resonance current and supplies a rectified current to the DC load RLoad.

The switching element 21 includes two semiconductor switches. The semiconductor switches are referred to as power transistors. As the semiconductor switches, it is possible to use a Metal Oxide Semiconductor Field Effect Transistor (MOSFET) which is a unipolar transistor, or an Insulated Gate Bipolar transistor (IGBT) which is a bipolar transistor, for example. In the present embodiment, as the two semiconductor switches of the switching element 21, two MOSFETs Q1 and Q2 are used, and a source terminal of the MOSFET Q1 and a source terminal of the MOSFET Q2 are connected to each other.

The MOSFETs Q1 and Q2 have parasitic capacitance. The parasitic capacitance of the MOSFETs Q1 and Q2 may be used as the shunt capacitor C2. The shunt capacitor C2 may also be constituted by components which can be used for other purposes, similar to the parasitic capacitance of the MOSFETs Q1 and Q2. It is needless to say that the shunt capacitor C2 may be constituted by components used exclusively for the shunt capacitor.

While one element of the MOSFETs Q1 and Q2 of the switching element 21 is turned on at 100% duty cycle, the other element repeatedly turns on and off at less than 100% duty cycle. The switching element 21 can function as a bidirectional switch by switching the one element of the switching element 21, which is turned on at 100% duty cycle, and the other element which is turned on and off at less than 100% duty cycle.

Due to the switching element 21 functioning as a bidirectional switch, the direction of a current flowing through the switching element 21 can be switched between a direction from the MOSFET Q1 to the MOSFET Q2, and a direction from the MOSFET Q2 to the MOSFET Q1. Due to the switching element 21 as the bidirectional switch responding to a positive or negative input voltage of the power conversion device 10, the number of elements of the power conversion device 10 through which an input current passes is less than the number of elements through which an input current passes when full-wave rectification of an input voltage of the power conversion device 10 is performed at a preceding stage of the inverter circuit 20. Due to reduction in the number of elements of the power conversion device 10, through which an input current passes, it is possible to implement high-efficiency power conversion performed by the power conversion device 10.

The rectifier circuit 30 includes a diode D1, a rectifying side capacitor C3, an inductor L2, and an output side capacitor C4. A cathode of the diode D1 is connected to the resonance capacitor Cr. An anode of the diode D1 is connected to the shunt capacitor C2. The rectifying side capacitor C3 is connected in parallel to the diode D1. The inductor L2 is connected to the cathode of the diode D1, the rectifying side capacitor C3 and the first output terminal OUT1. The output side capacitor C4 is connected between the first output terminal OUT1 and the second output terminal OUT2. The rectifier circuit 30 rectifies a resonance current of the LC resonance circuit 22, and outputs the obtained DC voltage to the DC load RLoad from the first output terminal OUT1 and the second output terminal OUT2.

The control unit 40 controls switching performed by the switching element 21 of the inverter circuit 20. When the switching element 21 performs Zero Voltage Switching (ZVS), the switching is performed while voltages at both ends of the switching element 21 are 0, and the loss when the switching element 21 turns on becomes 0. When the switching element 21 performs switching satisfying a ZVS condition, the loss due to switching is reduced, and the switching element 21 can perform switching at high frequency. When the switching element 21 performs switching at high frequency, it is possible to reduce the size of an inductor and capacitor of the inverter circuit 20, and an input current of the power conversion device 10 can be converted to a high-frequency AC current with high efficiency by the inverter circuit 20.

When the switching element 21 is turned on and off at a resonance frequency of the resonance circuit of the inverter circuit 20, the switching element 21 can perform switching satisfying the ZVS condition. The control unit 40 controls the switching element 21 such that the switching element 21 performs switching satisfying at least the ZVS condition. Generally, an inverter in which the switching element performs a switching operation satisfying the ZVS condition is referred to as a quasi class-E inverter. Generally, an inverter in which the switching element performs a switching operation satisfying both the ZVS condition and a Zero Derivative Switching (ZDS) condition is referred to as a class-E inverter. Due to the control unit 40 controlling the switching element 21, the inverter circuit 20 can operate as a quasi class-E inverter or class-E inverter. In the present embodiment, a case will be described, in which the control unit 40 controls the switching performed by the switching element 21 such that the inverter circuit 20 operates as a quasi class-E inverter. The detailed configuration of the control unit 40, and the details of the control performed by the control unit 40 will be described later.

### (Resonance circuit and resonance current of inverter circuit 20)

A path through which a resonance current of the inverter circuit 20 in the power conversion device 10 according to the present embodiment flows, differs between a time period when the switching element 21 is turned on, and a time period when the switching element 21 is turned off. During the time period when the switching element 21 is turned on, a path of a resonance current is the switching element 21 to the LC resonance circuit 22 to the rectifier circuit 30. During the time period when the switching element 21 is turned off, a path of a resonance current is the shunt capacitor C2 in parallel with the switching element 21 to the LC resonance circuit 22 to the rectifier circuit 30.

During the time period when the switching element 21 is turned off, the number of series-connected capacitors on a resonance current path increases, compared with that during the time period when the switching element 21 is turned on. If the number of series-connected capacitors on a resonance current path increases, a capacitance component constituting the LC resonance of the inverter circuit 20 decreases, and the resonance frequency of the resonance circuit represented by 1/(2π√(LC)) decreases. The resonance frequency of the resonance circuit of the inverter circuit 20 differs between the time period when the switching element 21 is turned on, and the time period when the switching element 21 is turned off.

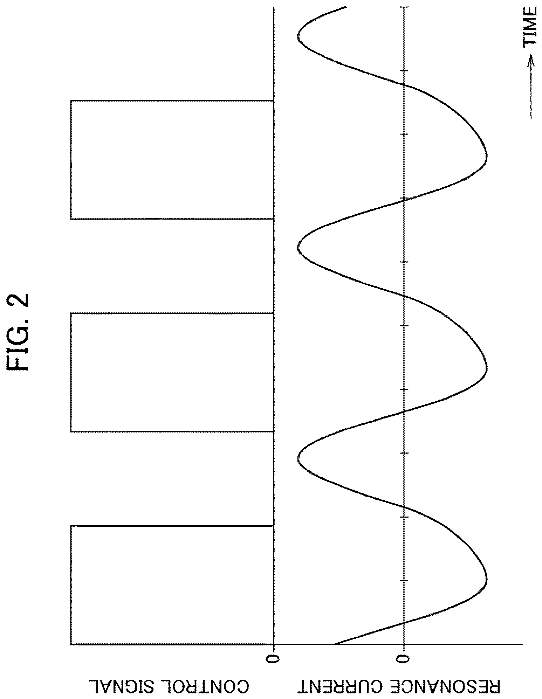

FIG. 2 is a diagram showing the relationship between a control signal for switching the switching element 21 of the inverter circuit 20, and a waveform of a resonance current generated in the resonance circuit of the inverter circuit 20 by switching the switching element 21, when an input voltage of the power conversion device 10 is positive. When one element of the MOSFETs Q1 and Q2 of the switching element 21 repeatedly turns on and off due to the control signal shown in FIG. 2, the switching element 21 turns an input current on and off in a direction corresponding to the positive input voltage of the power conversion device 10. During the time period when the one element of the switching element 21 repeatedly turns on and off, in principle, the resonance current generated in the resonance circuit of the inverter circuit 20 does not have an ideal sine wave, but has a waveform in which positive and negative are asymmetric.

The bidirectional switch is used for the switching element 21. Therefore, the inverter circuit 20 can switch an on/off state of an input current in both directions corresponding to positive and negative input voltages of the power conversion device 10, and generate a high-frequency resonance current, regardless of whether an input voltage is positive or negative.

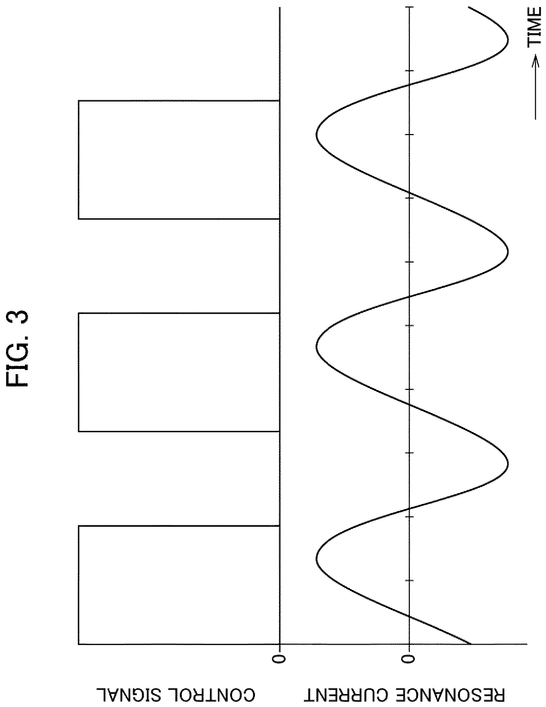

FIG. 3 is a diagram showing the relationship between a control signal for switching the switching element 21 of the inverter circuit 20, and a waveform of a resonance current generated in the resonance circuit of the inverter circuit 20 by switching the switching element 21, when an input voltage of the power conversion device 10 is negative. When the other element of the MOSFETs Q1 and Q2 of the switching element 21 repeatedly turns on and off due to the control signal shown in FIG. 3, the switching element 21 turns an input current on and off in a direction corresponding to the negative input voltage of the power conversion device 10. During the time period when the other element of the switching element 21 repeatedly turns on and off, the resonance current generated in the resonance circuit of the inverter circuit 20 has a waveform subjected to positive and negative inversion, compared to a waveform of a resonance current when an input voltage of the power conversion device 10 is positive.

To the rectifier circuit 30, the following is supplied: a resonance current of the inverter circuit 20 that has a waveform in which positive and negative are asymmetric, and which is subjected to positive and negative inversion, in accordance with the polarity of an input voltage of the power conversion device 10. The rectifier circuit 30 is a circuit that obtains a DC voltage of a positive polarity from a high-frequency AC current, and operates asymmetrically relative to positive and negative of a current.

When the polarity of an input voltage of the power conversion device 10 changes, an operation state of the power conversion device 10 including the inverter circuit 20 and the rectifier circuit 30 changes, due to the asymmetry of a resonance current of the inverter circuit 20, and due to the asymmetry of an operation of the rectifier circuit 30 described above. If the switching element 21 is merely turned on and off at a resonance frequency of the resonance circuit of the inverter circuit 20, it is not possible to cause the switching element 21 to perform switching satisfying the ZVS condition, both when an input voltage of the power conversion device 10 is positive, and when an input voltage is negative.

In general, in order to suppress adverse effects on a transformer and connected equipment in a later stage, it is desirable to control an input current of the power conversion device connected to an AC power supply to have a waveform with high power factor and low Total Harmonic Distortion (THD). In order to control an input current of the power conversion device to have a waveform with high power factor and low total harmonic distortion, it is sufficient if the input current of the power conversion device is controlled to have a waveform similar to that of an input voltage of an alternating current of the power conversion device. When the power conversion device operates at a high power factor and low total harmonic distortion, the input current of the power conversion device has a phase aligned with that of the input voltage of the power conversion device, and has the shape of a sine wave. The input power of the power conversion device, which is the product of the input voltage and the input current of the power conversion device, has a squared sine wave waveform.

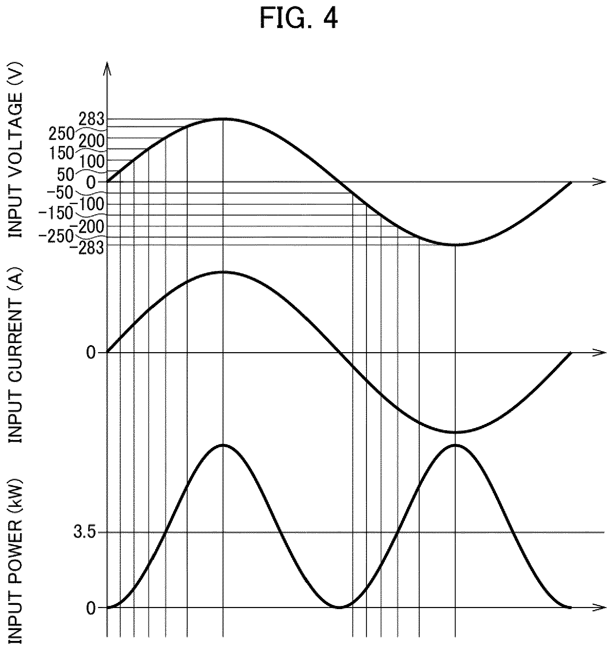

FIG. 4 is a diagram showing the relationship between an input current and input power of the power conversion device 10 controlled to have a waveform with high power factor and low total harmonic distortion, relative to a waveform of an input voltage of the power conversion device 10, when the power conversion device 10 operates at the average power of 3.5 kW, which is the maximum rated condition. As shown in FIG. 4, for example, when the power conversion device 10 operates at an average input power of 3.5 kW, a value to be taken by the input current of the power conversion device 10 is uniquely determined, according to the change in a voltage of an alternative current 200 V, which is an input voltage of the power conversion device 10.

When an instantaneous value of an input voltage and an output voltage are given as external conditions in the power conversion device 10, parameters which can be operated by the control unit 40 to change operating power of a circuit are a switching frequency, and the on-duty of the switching element 21. If the control unit 40 appropriately operates a switching frequency and the on-duty according to a change in an instantaneous value of an input voltage of the power conversion device 10, it is possible to turn on the switching element 21 satisfying the ZVS condition, while obtaining a desired current by the power conversion by the inverter circuit 20.

### (Relationship between instantaneous value of input voltage of power conversion device 10 and switching frequency and on-duty of switching element 21)

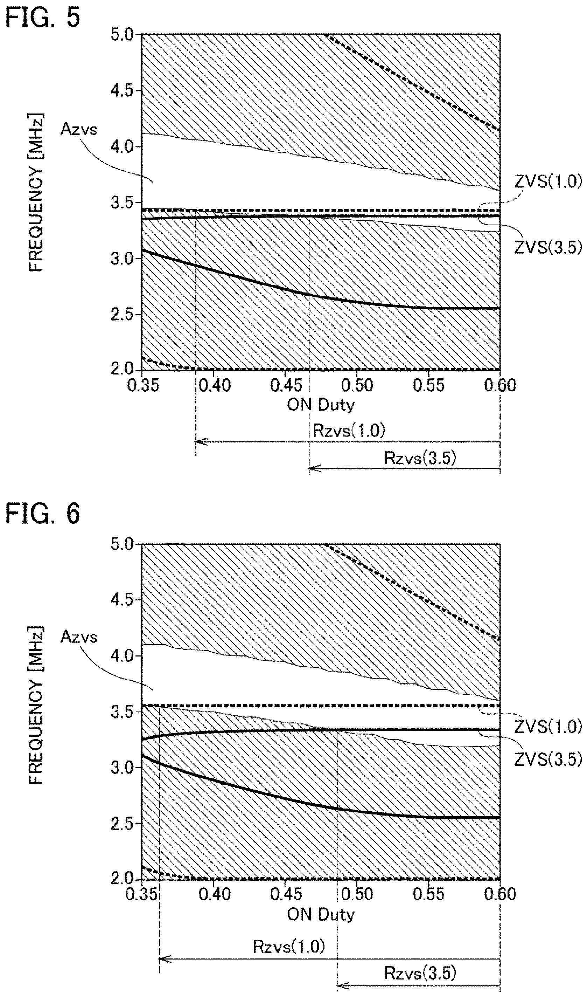

FIGS. 5 to 10 each show a combination of a switching frequency and on-duty to be selected by the switching element 21 of the inverter circuit 20, when an instantaneous value of an input voltage of the power conversion device 10 is positive. FIGS. 5 to 10 show when instantaneous values of input voltages of the power conversion device 10 from the AC power supply AC with an effective value of 200 V and 50 Hz are plus 50 V, plus 100 V, plus 150 V, plus 200 V, plus 250 V, and plus 283 V at maximum.

Solid lines and dashed lines in FIGS. 5 to 10 are trajectories of points showing combinations of switching frequencies and on-duties to be selected when the switching element 21 performs switching at each input voltage instantaneous value. A solid line trajectory ZVS (3.5) is a trajectory of a combination in which instantaneous power to be obtained in correspondence with an input voltage instantaneous value is obtained by the power conversion performed by the power conversion device 10, when the power conversion device 10 operates at the average input power of 3.5 kW. A dashed line trajectory ZVS (1.0) is a trajectory of a combination in which instantaneous power to be obtained by the power conversion performed by the power conversion device 10 is obtained, when the power conversion device 10 operates at the average input power of 1.0 kW.

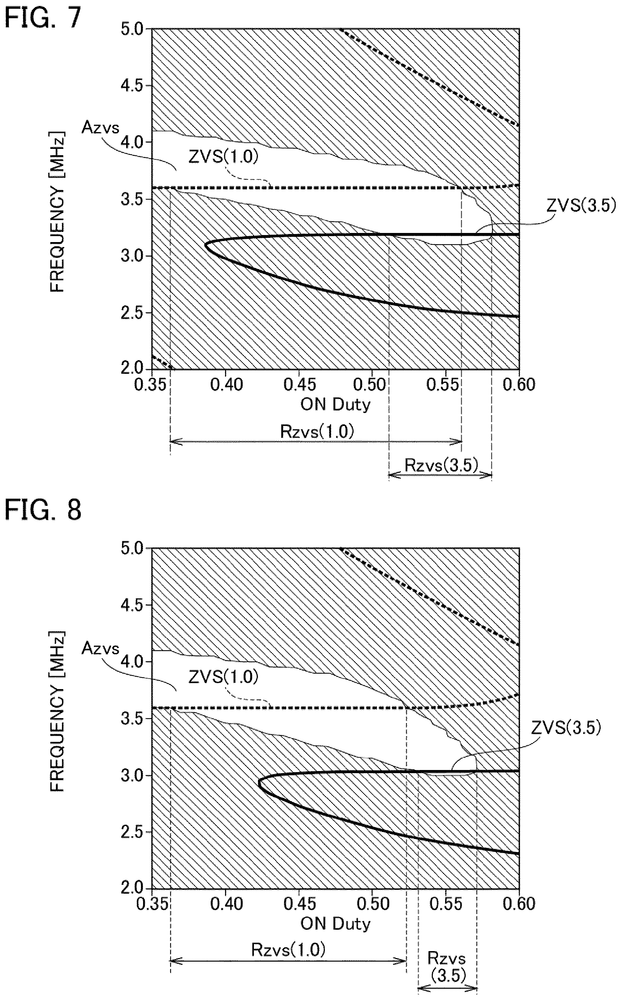

For example, when an input voltage instantaneous value of the power conversion device 10 operating at the average input power of 3.5 kW is plus 50 V, the switching element 21 is made to perform switching at a switching frequency and on-duty on a solid line trajectory ZVS (3.5) in FIG. 5. By causing the switching element 21 to perform switching at the switching frequency and on-duty, it is possible to obtain the instantaneous power of 218.75 W to be obtained by the power conversion performed by the power conversion device 10. Even when an input voltage instantaneous value is a value other than plus 50 V, the switching element 21 is made to perform switching at a switching frequency and on-duty on a trajectory ZVS (3.5) shown in each of FIGS. 6 to 10. By causing the switching element 21 to perform switching with a combination of each switching frequency and each on-duty, it is possible to obtain instantaneous power to be obtained by power conversion performed by the power conversion device 10. As shown in FIG. 8, for example, when an instantaneous value of input power of the power conversion device 10 is plus 200 V, an instantaneous power to be obtained by power conversion performed by the power conversion device 10 is 3.5 kW.

When the average input power of the power conversion device 10 is 1.0 kW, a switching frequency and on-duty of the switching element 21 are set to a combination of points on a trajectory ZVS (1.0) shown in each of FIGS. 5 to 10 at each input voltage instantaneous value. By causing the switching element 21 to perform switching with a combination of each switching frequency and each on-duty, it is possible to obtain instantaneous power to be obtained by power conversion performed by the power conversion device 10, even when the average input power of the power conversion device 10 is 1.0 kW.

It can be seen from FIGS. 5 to 10 that it is necessary for a switching frequency and on-duty of the switching element 21 to have appropriate values, in order to change the instantaneous power obtained by the power conversion device 10 according to a change of an input voltage instantaneous value during a time period when the input voltage of the power conversion device 10 is positive.

A plain area shown in each of FIGS. 5 to 10, excepting a hatched area, is a ZVS area Azvs in which the switching element 21 can perform ZVS turn-on at each of input voltage instantaneous values of plus 50 V, plus 100 V, plus 150 V, plus 200 V, plus 250 V, and plus 283 V. The ZVS turn-on of the switching element 21 means that the switching element 21 performs turn-on satisfying the ZVS condition. In an on-duty range of the trajectory ZVS (3.5) or trajectory ZVS (1.0) overlapping the ZVS area Azvs, the switching element 21 can perform ZVS turn-on, while obtaining instantaneous power to be obtained by the power conversion device 10.

A ZVS established range Rzvs (3.5) shown in each of FIGS. 5 to 10 is an on-duty range in which the switching element 21 can perform ZVS turn-on, while obtaining the instantaneous power to be obtained by the power conversion device 10, when the average input power of the power conversion device 10 is 3.5 kW, and an input voltage is positive. A ZVS established range Rzvs (1.0) is an on-duty range in which the switching element 21 can perform ZVS turn-on, while obtaining the instantaneous power to be obtained by the power conversion device 10, when the average input power of the power conversion device 10 is 1.0 kW, and an input voltage is positive.

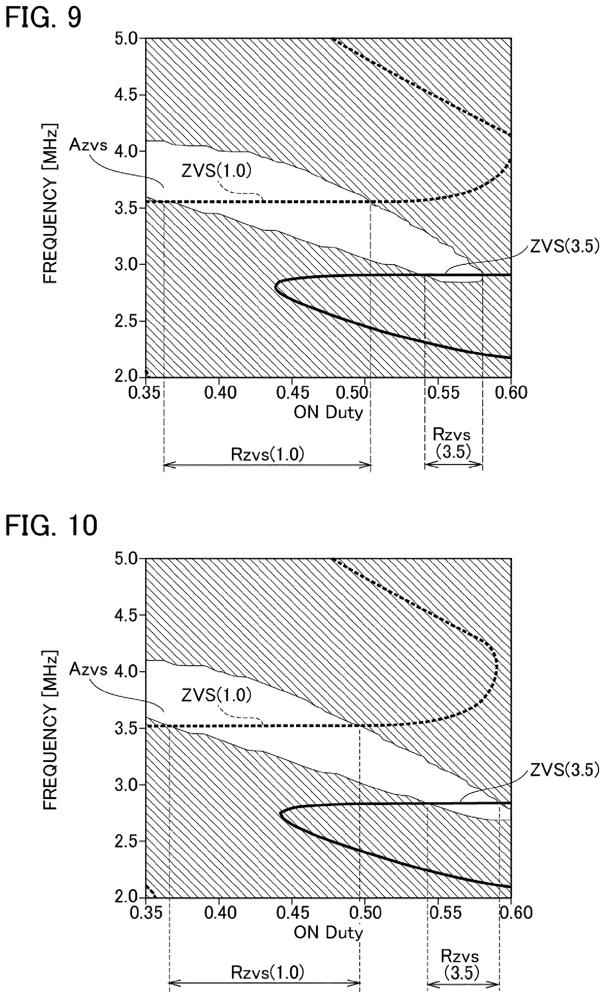

For example, when the average input power of the power conversion device 10 is 3.5 kW, and an input voltage instantaneous value is plus 200 V, the on-duty of the switching element 21 is set in a range from 0.53 to 0.57 in the ZVS established range Rzvs (3.5) shown in FIG. 8. When the average input power of the power conversion device 10 is 3.5 kW, and an input voltage instantaneous value is plus 283 V, the on-duty of the switching element 21 is set in a range from 0.54 to 0.59 in the ZVS established range Rzvs (3.5) shown in FIG. 10. By selecting a combination of the on-duty and a switching frequency of the switching element 21 in the ZVS established range Rzvs (3.5) at each input voltage instantaneous value, the switching element 21 can perform ZVS turn-on, while obtaining a desired instantaneous power value.

For example, when the average input power of the power conversion device 10 is 1.0 kW, and an input voltage instantaneous value is plus 200 V, the on-duty of the switching element 21 is set in a range from 0.36 to 0.52 in the ZVS established range Rzvs (1.0) shown in FIG. 8. By selecting a combination of an on-duty and a switching frequency in the ZVS established range Rzvs (1.0), the switching element 21 can perform ZVS turn-on, while obtaining a desired instantaneous power value.

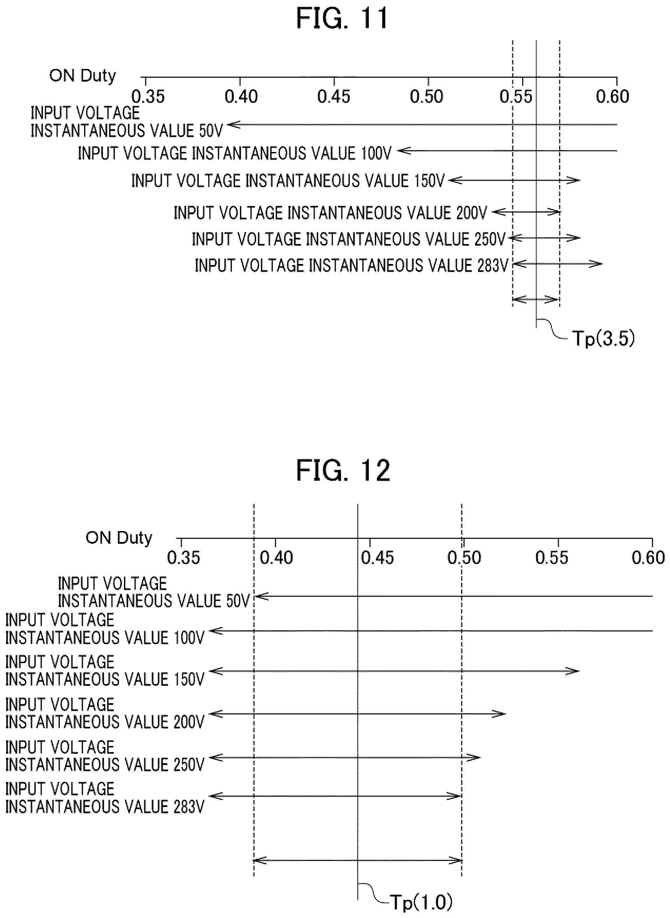

FIG. 11 is a diagram in which the ZVS established range Rzvs (3.5) of the on-duty of the switching element 21 is compared among positive input voltage instantaneous values of the power conversion device 10, when the average input power of the power conversion device 10 is 3.5 kW. FIG. 12 is a diagram in which the ZVS established range Rzvs (1.0) of the on-duty of the switching element 21 is compared among positive input voltage instantaneous values of the power conversion device 10, when the average input power of the power conversion device 10 is 1.0 kW.

During a time period when an input voltage of the power conversion device 10 is positive, when the average input power is 3.5 kW, the switching element 21 can perform ZVS switching at all input voltage instantaneous values, if the on-duty of the switching element 21 is in a range from 0.54 to 0.57 as shown in FIG. 11. Considering a margin for the switching element 21 to reliably perform ZVS switching, it is considered that a value in the vicinity of 0.555, which is a median Tp (3.5) in a range from 0.54 to 0.57, may be selected as the on-duty of the switching element 21, for example.

During a time period when an input voltage of the power conversion device 10 is positive, when the average input power is 1.0 kW, the switching element 21 can perform ZVS switching at all input voltage instantaneous values, if the on-duty of the switching element 21 is in a range from 0.38 to 0.50 as shown in FIG. 12. Considering a margin, it is considered that a value in the vicinity of 0.44, which is a median Tp (1.0) in a range from 0.38 to 0.50, may be selected as the on-duty of the switching element 21, for example.

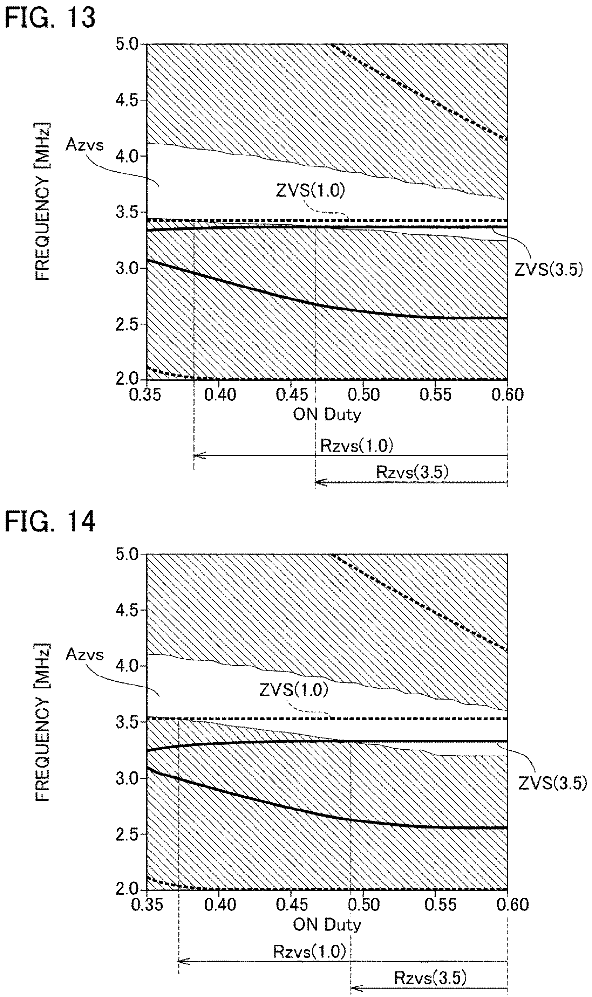

FIGS. 13 to 18 are diagrams showing combinations of switching frequencies and on-duties to be selected by the switching element 21 of the inverter circuit 20, when an input voltage instantaneous value of the power conversion device 10 is negative. FIGS. 13 to 18 show when input voltage instantaneous values of the power conversion device 10 are minus 50 V, minus 100 V, minus 150 V, minus 200 V, minus 250 V, and minus 283 V at maximum.

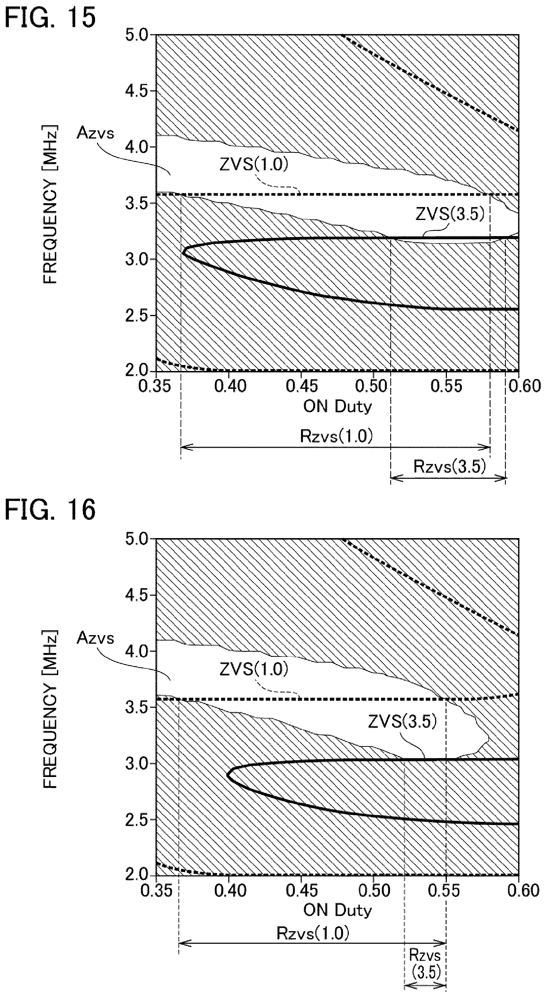

For example, when an input voltage instantaneous value of the power conversion device 10 operating at an average input power of 3.5 kW is minus 200 V, the switching element 21 is made to perform switching at a switching frequency and on-duty on a solid line trajectory ZVS (3.5) in FIG. 16. By causing the switching element 21 to perform switching at the switching frequency and on-duty, it is possible to obtain instantaneous power to be obtained by the power conversion performed by the power conversion device 10. Even when an input voltage instantaneous value is a value other than minus 200 V, the switching element 21 is made to perform switching at a switching frequency and on-duty on a trajectory ZVS (3.5) of each of FIGS. 13 to 15, 17, and 18. By causing the switching element 21 to perform switching with a combination of each switching frequency and each on-duty, it is possible to obtain instantaneous power to be obtained by the power conversion performed by the power conversion device 10.

When the average input power of the power conversion device 10 is 1.0 kW, a switching frequency and on-duty of the switching element 21 are set to a combination of points on a trajectory ZVS (1.0) shown in each of FIGS. 13 to 18 at each input voltage instantaneous value. By causing the switching element 21 to perform switching with a combination of each switching frequency and each on-duty, it is possible to obtain instantaneous power to be obtained by power conversion performed by the power conversion device 10, even when average input power of the power conversion device 10 is 1.0 kW.

It can be seen from FIGS. 13 to 18 that it is necessary for a switching frequency and on-duty of the switching element 21 to have appropriate values, in order to change the instantaneous power obtained by the power conversion device 10 according to a change of an input voltage instantaneous value, during a time period when an input voltage of the power conversion device 10 is negative.

Even when an input voltage of the power conversion device 10 is negative, there is a ZVS area Azvs in which the switching element 21 can perform ZVS turn-on, as shown in each of FIGS. 13 to 18. When the switching element 21 is made to perform switching at a switching frequency and on-duty on a trajectory ZVS (3.5) or trajectory ZVS (1.0) in the ZVS area Azvs in each of FIGS. 13 to 18, the switching element 21 can perform the ZVS turn-on, while obtaining instantaneous power to be obtained.

A ZVS established range Rzvs (3.5) shown in each of FIGS. 13 to 18 is an on-duty range in which the switching element 21 can perform ZVS turn-on, while obtaining the instantaneous power to be obtained by the power conversion device 10, when the average input power of the power conversion device 10 is 3.5 kW, and an input voltage is negative. A ZVS established range Rzvs (1.0) is an on-duty range in which the switching element 21 can perform ZVS turn-on, while obtaining the instantaneous power to be obtained by the power conversion device 10, when the average input power of the power conversion device 10 is 1.0 kW, and an input voltage is negative.

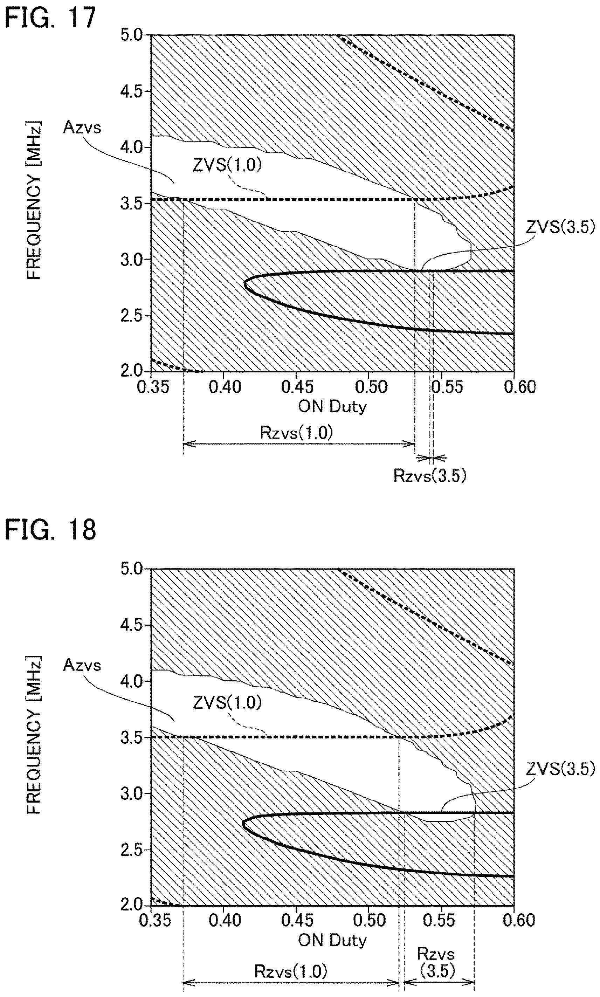

For example, when the average input power of the power conversion device 10 is 3.5 kW, and an input voltage instantaneous value is minus 200 V, the on-duty of the switching element 21 is set in a range from 0.52 to 0.55 in the ZVS established range Rzvs (3.5) shown in FIG. 16. When the average input power of the power conversion device 10 is 3.5 kW, and an input voltage instantaneous value is minus 283 V, the on-duty of the switching element 21 is set in a range from 0.53 to 0.57 in the ZVS established range Rzvs (3.5) shown in FIG. 18. By selecting a combination of an on-duty and a switching frequency in the ZVS established range Rzvs (3.5) at each input voltage instantaneous value, the switching element 21 can perform ZVS turn-on, while obtaining a desired instantaneous power value.

For example, when the average input power of the power conversion device 10 is 1.0 kW, and an input voltage instantaneous value is minus 200 V, the on-duty of the switching element 21 is set in a range from 0.36 to 0.55 in the ZVS established range Rzvs (1.0) shown in FIG. 16. By selecting a combination of an on-duty and a switching frequency in the ZVS established range Rzvs (1.0), the switching element 21 can perform ZVS turn-on, while obtaining a desired instantaneous power value.

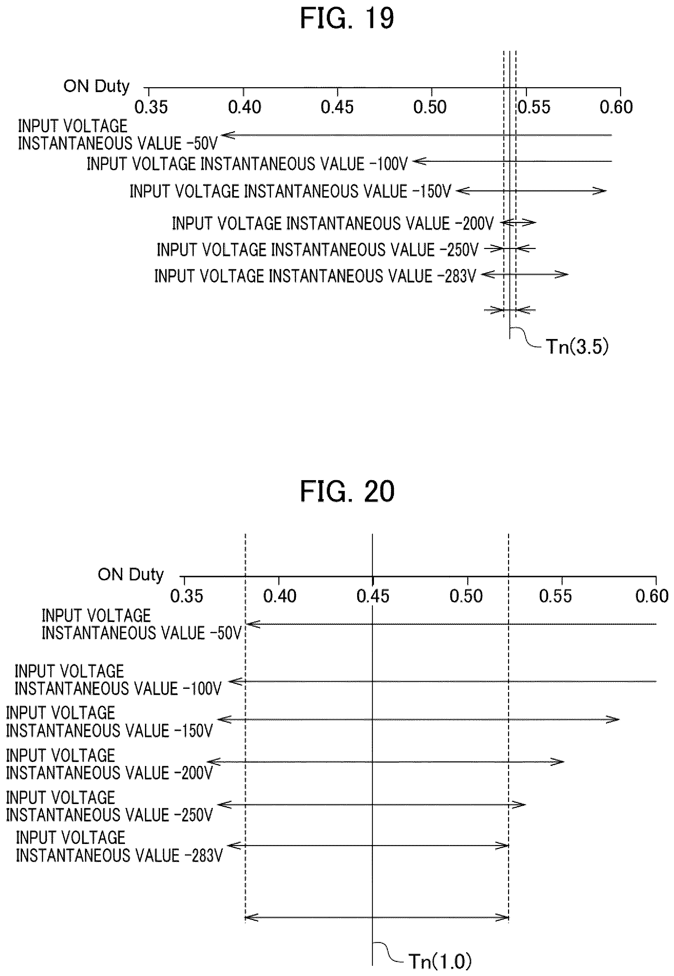

FIG. 19 is a diagram in which the ZVS established range Rzvs (3.5) of the on-duty of the switching element 21 is compared among negative input voltage instantaneous values of the power conversion device 10, when the average input power of the power conversion device 10 is 3.5 kW. FIG. 20 is a diagram in which the ZVS established range Rzvs (1.0) of the on-duty of the switching element 21 is compared among negative input voltage instantaneous values of the power conversion device 10, when the average input power of the power conversion device 10 is 1.0 kW.

During a time period when an input voltage of the power conversion device 10 is negative, when the average input power is 3.5 kW, the switching element 21 can perform ZVS switching at all input voltage instantaneous values, if the on-duty of the switching element 21 is in a range from 0.54 to 0.545 as shown in FIG. 19. Considering a margin for the switching element 21 to reliably perform ZVS switching, it is considered that a value in the vicinity of 0.542, which is a median Tn (3.5) in a range from 0.54 to 0.545, may be selected as the on-duty of the switching element 21, for example.

During a time period when an input voltage of the power conversion device 10 is negative, when the average input power is 1.0 kW, the switching element 21 can perform ZVS switching at all input voltage instantaneous values, if the on-duty of the switching element 21 is in a range from 0.38 to 0.52 as shown in FIG. 20. Considering a margin, it is considered that a value in the vicinity of 0.45, which is a median Tn (1.0) in a range from 0.38 to 0.52, may be selected as the on-duty of the switching element 21, for example.

### (Detailed configuration of control unit 40 and details of control performed on switching element 21 by control unit 40)

Comparing FIGS. 11 and 19, it can be seen that, an on-duty range in which the switching element 21 can perform ZVS switching at all input voltage instantaneous values of the power conversion device 10 of which average input power is 3.5 kW, differs depending on whether an input voltage of the power conversion device 10 is positive or negative. Comparing FIGS. 12 and 20, it can be seen that, an on-duty range in which the switching element 21 can perform ZVS switching at all input voltage instantaneous values of the power conversion device 10 of which average input power is 1.0 kW, also differs depending on whether an input voltage of the power conversion device 10 is positive or negative. From these comparisons, it can be seen that, an on-duty range in which the switching element 21 can perform ZVS switching, differs depending on whether an input voltage of the power conversion device 10 is positive or negative, regardless of whether the average input power of the power conversion device 10 is high or low.

In the present embodiment, the control unit 40 sets on-duties of the switching element 21 separately for a time period when an input voltage of the power conversion device 10 is positive, and a time period when an input voltage is negative. The control unit 40 changes the on-duties of the switching element 21 depending on whether an input voltage of the power conversion device 10 is positive or negative. Due to the control unit 40 changing the on-duties of the switching element 21 depending on whether an input voltage of the power conversion device 10 is positive or negative, the switching element 21 can perform ZVS-switching during both a time period when an input voltage of the power conversion device 10 is positive, and a time period when an input voltage is negative.

The control unit 40 shown in FIG. 1 includes a general-purpose microcontroller, for example. The microcontroller includes a Central Processing Unit (CPU) and a memory. The memory includes a Read Only Memory (ROM) and a Random Access Memory (RAM). The microcontroller can virtually construct a plurality of information processing circuits due to the CPU executing a program stored in the memory. The plurality of information processing circuits can constitute a polarity detecting unit 41, an on-duty operation unit 42, and a control signal generating unit 43 of the control unit 40.

The present embodiment shows an example in which the plurality of information processing circuits constructed by the microcontroller are implemented by software. It is needless to say that, it is also possible to configure each information processing circuit by preparing dedicated hardware for performing each information process of each of the units 41 to 43 described below. Further, the plurality of information processing circuits may be configured by individual pieces of hardware. The dedicated hardware includes devices such as an Application Specific Integrated Circuit (ASIC) arranged to perform functions of each of the units 41 to 43, and conventional circuit components.

The polarity detecting unit 41 detects whether the polarity of an input voltage of the power conversion device 10 is positive or negative, the polarity being measured by the input voltmeter 60 connected between the first input terminal IN1 and the second input terminal IN2. The on-duty operation unit 42 operates the on-duty in the switching performed by the switching element 21, in accordance with the polarity of the input voltage of the power conversion device 10 detected by the polarity detecting unit 41.

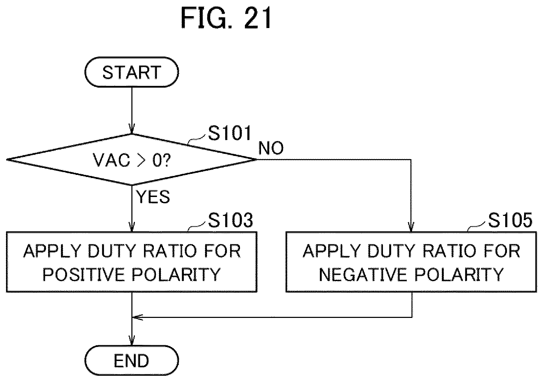

FIG. 21 is a flowchart showing an example of a processing procedure performed by the on-duty operation unit 42. The on-duty operation unit 42 confirms the polarity of an input voltage VAC, depending on whether the input voltage VAC of the power conversion device 10 detected by the polarity detecting unit 41 is higher than zero (step S101). If the input voltage VAC is higher than zero (YES in step S101), the on-duty operation unit 42 assumes that the input voltage VAC has a positive polarity, and operates the on-duty of the switching element 21 to a value to which the duty ratio for positive polarity is applied (step S103). The duty ratio for positive polarity can be a value selected from an on-duty range in which the switching element 21 can perform ZVS switching at all input voltage instantaneous values of the power conversion device 10 during a time period when the input voltage VAC is positive. This value can be a median, or a value in the vicinity of the median, of the on-duty range in which the switching element 21 can perform ZVS switching, as has been described with reference to FIGS. 11 and 12, for example.

If the input voltage VAC is zero or lower (NO in step S101), the on-duty operation unit 42 assumes that the input voltage VAC has a negative polarity, and operates the on-duty of the switching element 21 to a value to which the duty ratio for negative polarity is applied (step S105). The duty ratio for negative polarity can be a value selected from an on-duty range in which the switching element 21 can perform ZVS switching at all input voltage instantaneous values of the power conversion device 10 during a time period when the input voltage VAC is negative. This value can be a median, or a value in the vicinity of the median, of the on-duty range in which the switching element 21 can perform ZVS switching, as has been described with reference to FIGS. 19 and 20, for example. The on-duty operation unit 42 operates the on-duty of the switching element 21 in step S103 or step S105, and then ends the processing.

The control signal generating unit 43 generates a control signal for switching performed by the switching element 21 corresponding to the on-duty operated by the on-duty operation unit 42, and outputs the control signal to the switching element 21. The control signal generating unit 43 generates a control signal for the MOSFET Q1 of the switching element 21, and a control signal for the MOSFET Q2 of the switching element 21. Control signals are individually input to gates of the MOSFET Q1 and the MOSFET Q2. The control signal generating unit 43 generates a control signal for turning on the MOSFET Q1 at 100% duty cycle, and a control signal for turning on the MOSFET Q2 at the duty of the value to which the duty ratio for positive polarity is applied, during a time period when the input voltage VAC has a positive value. The control signal generating unit 43 generates a control signal for turning on the MOSFET Q1 at the duty of the value to which the duty ratio for negative polarity is applied, and a control signal for turning on the MOSFET Q2 at 100% duty cycle, during a time period when the input voltage VAC has a negative value.

### (Functions and effects of power conversion device 10 of first embodiment)

Whether the resonance circuit of the inverter circuit 20 in the power conversion device 10 shown in FIG. 1 includes the shunt capacitor C2 changes, depending on whether the switching element 21 as the bidirectional switch is turned on or off. As shown in FIGS. 2 and 3, a waveform of a high-frequency AC current generated by the resonance circuit of the inverter circuit 20 is a waveform in which positive and negative are asymmetric, because a configuration of the resonance circuit changes, depending on whether the switching element 21 is turned on or off. The waveform of the high-frequency AC current generated by the inverter circuit 20 is subjected to positive and negative inversion, according to the polarity of the input voltage VAC of the power conversion device 10. Since an AC current in which positive and negative are asymmetric is subjected to positive and negative inversion, the waveform of the high-frequency AC current generated by the inverter circuit 20 becomes a different waveform according to the polarity of the input voltage VAC.

The control unit 40 changes the on-duty of a switching operation performed by the switching element 21 according to the polarity of the input voltage VAC of the power conversion device 10. Specifically, the control unit 40 sets the on-duty of a switching operation performed by the switching element 21 corresponding to the polarity of the input voltage VAC in each of the ZVS established range Rzvs (3.5) and the ZVS established range Rzvs (1.0) at input voltage instantaneous values. By setting and changing the on-duty of the switching operation performed by the switching element 21 from in the different ranges according to the polarity of the input voltage VAC, it is less likely that a parameter of the resonance circuit of the inverter circuit 20 changes between polarities, while the switching element 21 is turned on. Since it is less likely that a parameter of the resonance circuit changes between polarities, it is less likely that the waveform of a high-frequency AC current generated by the inverter circuit 20 differs according to the polarity of the input voltage VAC, and this makes it easier for the switching element 21 to implement low loss switching by ZVS switching. Since low loss switching is accelerated by implementation of low loss switching performed by the switching element 21, the switching loss in the inverter circuit 20 can be further reduced.

### (Modified example of first embodiment)

When the average input power of the power conversion device 10 is 3.5 kW on average, which is the maximum rated condition, the ZVS established range Rzvs (3.5) is distributed in a lower range when the input voltage VAC of the power conversion device 10 has a negative polarity than when the input voltage VAC has a positive polarity. When the average input power of the power conversion device 10 is 3.5 kW on average, the control unit 40 may reduce the on-duty of a switching operation performed by the switching element 21 when the input voltage VAC has a negative polarity, more than the on-duty when the input voltage VAC has a positive polarity. By reducing the on-duty when the input voltage VAC has a negative polarity, compared to the on-duty when the input voltage VAC has a positive polarity, when the average input power of the power conversion device 10 is 3.5 kW on average, the switching loss in the inverter circuit 20 can be reduced more appropriately. The control unit 40 may reduce the on-duty of a switching operation performed by the switching element 21 when the input voltage VAC has a negative polarity, compared to the on-duty when the input voltage VAC has a positive polarity, regardless of the numerical value of the average input power of the power conversion device 10, for example. Even if the on-duty when the input voltage VAC has a negative polarity is reduced compared to the on-duty when the input voltage VAC has a positive polarity, the same effect as in the first embodiment can be obtained by selecting the on-duty of each polarity from the ZVS established ranges.

### (Second embodiment)

### (Configuration of power conversion device according to second embodiment)

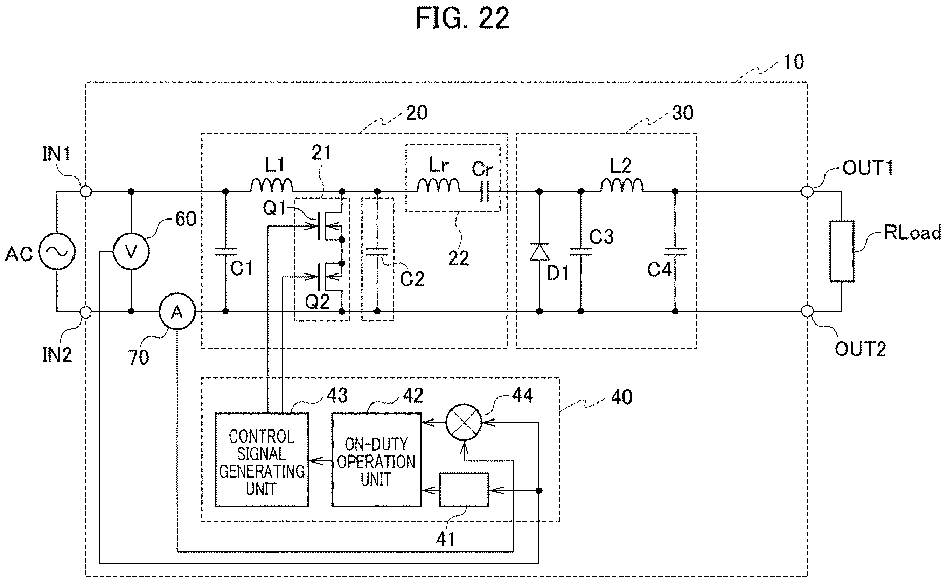

FIG. 22 shows the configuration of a power conversion device according to a second embodiment of the present invention. The power conversion device 10 according to the second embodiment shown in FIG. 22 has a configuration in which an input ammeter 70, and a multiplier 44 in the control unit 40 are added to the power conversion device 10 of the first embodiment shown in FIG. 1. Descriptions of portions in the configuration of the power conversion device 10 of the second embodiment, which are the same as portions of the power conversion device 10 of the second embodiment, are omitted in order to avoid duplication of descriptions.

The input ammeter 70 is connected between a connection point located between the second input terminal IN2 and the input voltmeter 60, and a connection point located between the second input terminal IN2 and the smoothing capacitor C1. The input ammeter 70 measures an input current of the power conversion device 10. The multiplier 44 multiplies a value of the input voltage VAC of the power conversion device 10 measured by the input voltmeter 60, by an input current value of the power conversion device 10 measured by the input ammeter 70, and outputs the input power value of the power conversion device 10 to the on-duty operation unit 42. The on-duty operation unit 42 of the present embodiment operates the on-duty in switching performed by the switching element 21 according to the polarity of the input voltage VAC detected by the polarity detecting unit 41, and the average value of input power values of the multiplier 44. The on-duty operation unit 42 functions as an average value detecting unit which detects the average value of the AC power input to the first input terminal IN1 and the second input terminal IN2.

Comparing FIGS. 11 and 12, when the input voltage VAC of the power conversion device 10 has a positive polarity, the ZVS established range Rzvs (3.5) is narrower than the ZVS established range Rzvs (1.0). Comparing FIGS. 19 and 20, when the input voltage VAC has a negative polarity, the ZVS established range Rzvs (3.5) is narrower than the ZVS established range Rzvs (1.0). Regardless of the polarity of the input voltage VAC, it is considered that a ZVS established range tends to become narrower, as the average input power of the power conversion device 10 increases. The ZVS established range Rzvs (3.5) when the average input power of the power conversion device 10 is 3.5 kW on average, which is the maximum rated condition, is distributed in a lower range when the input voltage VAC has a negative polarity than when the input voltage VAC has a positive polarity. If the on-duty of the switching element 21 when the input voltage VAC has a negative polarity is made lower than the on-duty when the input voltage VAC has a positive polarity, as the average input power of the power conversion device 10 increases, it is considered that the switching element 21 can perform ZVS switching at all input voltage instantaneous values.

The control unit 40 may reduce the on-duty of a switching operation performed by the switching element 21 when the input voltage VAC of the power conversion device 10 has a negative polarity, more than the on-duty when the input voltage VAC has a positive polarity, the reduction increasing as the average input power of the power conversion device 10 increases. In the present embodiment, when the input power of the power conversion device 10 is a predetermined ratio or higher, relative to the input power of the maximum rated condition, the control unit 40 reduces the on-duty in switching performed by the switching element 21 when the input voltage VAC has a negative polarity, compared to the on-duty when the input voltage VAC has a positive polarity.

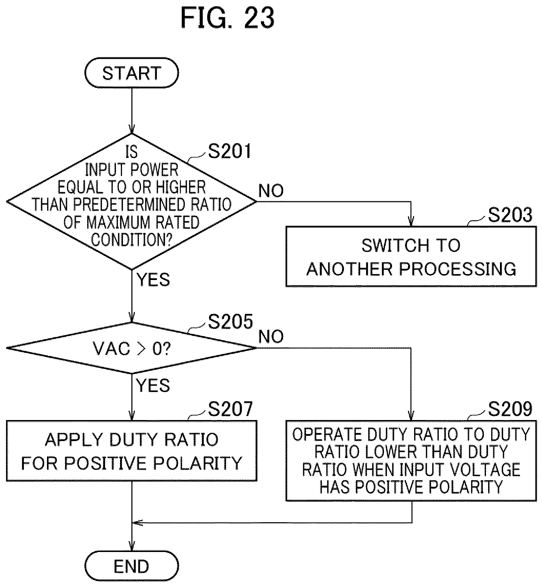

FIG. 23 is a flowchart showing an example of a processing procedure performed by the on-duty operation unit 42 of the power conversion device 10 of the second embodiment. The on-duty operation unit 42 confirms whether the average value of input power values of the multiplier 44 is the predetermined ratio or higher, relative to 3.5 kW on average, which is the maximum rated condition of the power conversion device 10 (step S201). The predetermined ratio may be 3.15 kW, which is 90% of the maximum rated condition, for example. If the average value of the input power values of the multiplier 44 is less than the predetermined ratio, relative to the maximum rated condition (NO in step S201), the on-duty operation unit 42 switches the processing to another processing (step S203). Another processing can be the processing shown in FIG. 21 performed by the on-duty operation unit 42 in the power conversion device 10 of the first embodiment, for example. If the average value of the input power values of the multiplier 44 is the predetermined ratio or higher, relative to the maximum rated condition (YES in step S201), the on-duty operation unit 42 confirms the polarity of the input voltage VAC of the power conversion device 10 detected by the polarity detecting unit 41. The polarity can be confirmed by confirming whether the input voltage VAC is higher than zero (step S205).

If the input voltage VAC is higher than zero (YES in step S205), the on-duty operation unit 42 assumes that the input voltage VAC has a positive polarity, and operates the on-duty of the switching element 21 to a value to which the duty ratio for positive polarity is applied (step S207). If the input voltage VAC is zero or less (NO in step S205), the on-duty operation unit 42 assumes that the input voltage VAC has a negative polarity, and operates the on-duty of the switching element 21 to a value lower than that when the input voltage VAC has a positive polarity (step S209). The value can be a value selected from an on-duty range in which the switching element 21 can perform ZVS switching at all input voltage instantaneous values of the power conversion device 10, during a time period when the input voltage VAC of the power conversion device 10 is negative. The on-duty operation unit 42 ends the processing after operating the on-duty of the switching element 21 in step S207 or step S209.

### (Functions and effects of power conversion device 10 of second embodiment)

In the present embodiment, when the average value of input power values of the power conversion device 10 is the predetermined ratio or higher, relative to the input power of the maximum rated condition, the control unit 40 reduces the on-duty of the switching element 21 when the input voltage VAC has a negative polarity, more than the on-duty when the input voltage VAC has a positive polarity. The power conversion device 10 of the present embodiment can also further implement a low loss switching operation.

### (Modified example of second embodiment)

The on-duty operation unit 42 may perform alternative processing instead of performing processing for confirming whether the average value of input power values of the multiplier 44 is the predetermined ratio or higher, relative to the input power of the maximum rated condition of the power conversion device 10. The alternative processing may be processing for confirming whether the average value of input current values of the input ammeter 70 is the predetermined ratio or higher, relative to an input current of the maximum rated condition of the power conversion device 10, for example. The input current of the maximum rated condition of the power conversion device 10 can be obtained from the input power of the maximum rated condition of the power conversion device 10, and a value of the input voltage VAC of the input voltmeter 60, for example. The on-duty operation unit 42 functions as an average value detecting unit which detects the average value of a current flowing between the first input terminal IN1 and the second input terminal IN2. When the average value of input current values of the input ammeter 70 is the predetermined ratio or higher, relative to an input current of the maximum rated condition, the control unit may reduce the on-duty of a switching operation performed by the switching element 21 when the input voltage VAC has a negative polarity, compared to the on-duty when the input voltage VAC has a positive polarity. In this case, the same effect can be obtained.

The same effect can be obtained, even if the control unit 40 reduces the on-duty of a switching operation performed by the switching element 21 when the input voltage VAC has a negative polarity, compared to the on-duty when the input voltage VAC has a positive polarity, as the average input power or average input current of the power conversion device 10 increases.

### (Third embodiment)

### (Configuration of power conversion device according to third embodiment)

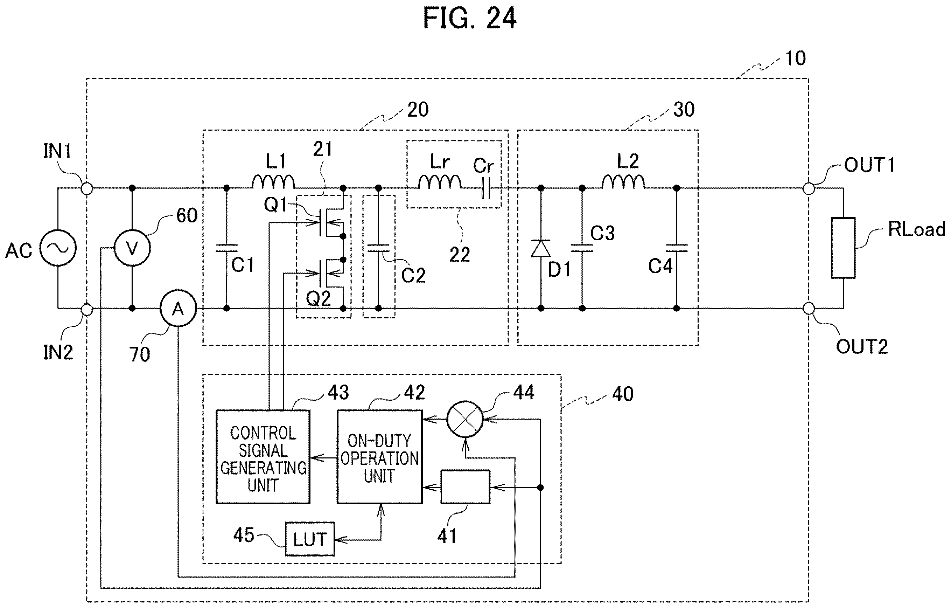

FIG. 24 shows the configuration of a power conversion device according to a third embodiment of the present invention. The power conversion device 10 of the third embodiment shown in FIG. 24 has a configuration in which a lookup table (LUT) 45 is added to the power conversion device 10 of the second embodiment shown in FIG. 22. Descriptions of portions in the configuration of the power conversion device 10 of the third embodiment, which are the same as portions of the power conversion device 10 of the second embodiment are omitted, in order to avoid duplication of descriptions.

The lookup table 45 can be stored in the memory of the microcontroller of the control unit 40, for example. The lookup table 45 is a table in which the polarity of the input voltage VAC and the average input power value of the power conversion device 10 are associated with an on-duty value in which the switching element 21 can perform ZVS switching at all input voltage instantaneous values of the power conversion device 10, for example. The lookup table 45 can be configured for each polarity of the input voltage VAC. The on-duty operation unit 42 of the control unit 40 of the power conversion device 10 according to the third embodiment extracts, from the lookup table 45, an on-duty value corresponding to the polarity confirmed from a value of the input voltage VAC of the polarity detecting unit 41, and an input power value of the multiplier 44, for example. The on-duty operation unit 42 sets the extracted on-duty value as the on-duty of the switching element 21 corresponding to the polarity of the input voltage VAC and average input power value of the power conversion device 10 in the processing of step S205 or step S207 of FIG. 23, for example.

### (Functions and effects of power conversion device 10 of third embodiment)

In the present embodiment, the control unit 40 can easily extract, from the lookup table 45, an on-duty value of the switching element 21 corresponding to the polarity of the input voltage VAC and the average input power value. The power conversion device 10 of the present embodiment can easily select the suitable on-duty of a switching operation in which the switching element 21 can perform low loss switching, from contents specified in the lookup table 45, according to the polarity of the input voltage VAC. The lookup table 45 of the present embodiment can also be used, when the on-duty operation unit 42 of the first embodiment operates the on-duty of the switching element 21 according to the polarity of the input voltage VAC, for example.

### (Fourth embodiment)

### (Configuration of power conversion device according to fourth embodiment)

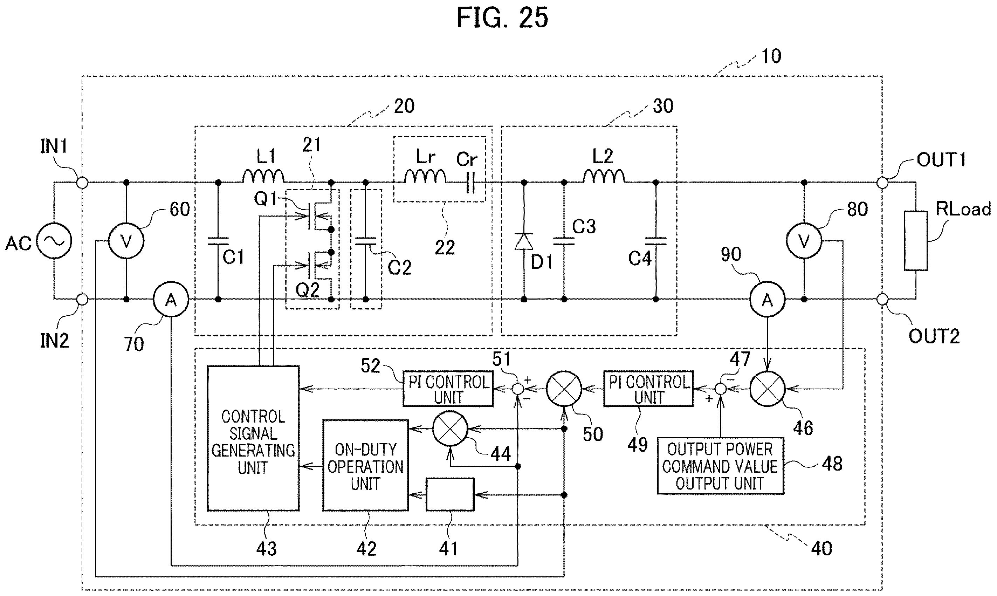

FIG. 25 shows the configuration of a power conversion device according to a fourth embodiment of the present invention. The power conversion device 10 according to the fourth embodiment shown in FIG. 25 has a configuration in which an output voltmeter 80 and an output ammeter 90 are added to the power conversion device 10 of the second embodiment shown in FIG. 22. The power conversion device 10 of the fourth embodiment further has a configuration in which multipliers 46 and 50, adders 47 and 51, an output power command value output unit 48, and PI control units 49 and 52 which are included in the control unit 40, are added to the power conversion device 10 of the second embodiment. Descriptions of portions in the configuration of the power conversion device 10 of the fourth embodiment, which are the same as portions of the power conversion device 10 of the second embodiment are omitted, in order to avoid duplication of descriptions.

The output voltmeter 80 is connected between the first output terminal OUT1 and the second output terminal OUT2. The output voltmeter 80 measures an output voltage of the power conversion device 10. The output ammeter 90 is connected between a connection point located between the second output terminal OUT2 and the output voltmeter 80, and a connection point located between the second input terminal IN2 and the output side capacitor C4. The output ammeter 90 measures an output current of the power conversion device 10. The multiplier 46 multiplies the output voltage value of the power conversion device 10 measured by the output voltmeter 80, by the output current value of the power conversion device 10 measured by the output ammeter 90, and outputs the output power value of the power conversion device 10 to the adder 47.

The adder 47 outputs, to the PI control unit 49, the difference between an output power value of the multiplier 46, and a command value of output power to be obtained from the power conversion device 10 output by the output power command value output unit 48. The PI control unit 49 outputs a power control value for reducing the difference of the adder 47 to the multiplier 50. The multiplier 50 outputs, to the adder 51, a current control value obtained by dividing the power control value of the PI control unit 49 by a value of the input voltage VAC of the input voltmeter 60. The adder 51 outputs, to the PI control unit 52, the difference between, the current control value of the multiplier 50, and an input current value of the input ammeter 70. The PI control unit 52 outputs a current control value for reducing the difference of the adder 51, to the control signal generating unit 43.

The control signal generating unit 43 generates control signals for switching performed by the switching element 21, corresponding to a switching frequency of the switching element 21 corresponding to the current control value of the PI control unit 52, and the on-duty operated by the on-duty operation unit 42, and outputs the control signals to the switching element 21. Similarly to the control signal generating unit 43 in the power conversion device 10 of the second embodiment, the control signal generating unit 43 generates a control signal for the MOSFET Q1 of the switching element 21, and a control signal for the MOSFET Q2 of the switching element 21. However, each of the control signal for the MOSFET Q1 and the control signal for the MOSFET Q2, which are generated by the control signal generating unit 43, is a control signal of the switching frequency corresponding to the current control value of the PI control unit 52.

As shown in FIGS. 5 to 10 and 13 to 18, the trajectory ZVS (3.5) and the trajectory ZVS (1.0) extend substantially parallel to a horizontal axis in the ZVS area Azvs. From the trajectory ZVS (3.5) and the trajectory ZVS (1.0) in the ZVS area Azvs, it is understood that in the ZVS area Azvs, the on-duty of switching performed by the switching element 21 has substantially no influence on the average input power of the power conversion device 10. FIGS. 5 to 10 and 13 to 18 show that in the ZVS area Azvs, an input power instantaneous value of the power conversion device 10 is substantially determined by a switching frequency of the switching element 21. This is because an input current of the power conversion device 10 changes due to a change in a switching frequency of the switching element 21, and as a result, input power of the power conversion device 10 changes. A change in a gain of the input power of the power conversion device 10 due to a change in a switching frequency of the switching element 21, is significantly larger than a change in a gain of the input power of the power conversion device 10 due to a change in the on-duty of the switching element 21.

### (Functions and effects of power conversion device 10 of fourth embodiment)

As has been described in the first embodiment, controllable parameters of the inverter circuit 20 are a switching frequency and on-duty of the switching element 21. As can be seen from FIGS. 5 to 10 and 13 to 18, when a switching frequency of the switching element 21 is operated, an input current of the power conversion device 10 changes with high responsiveness, and the input voltage VAC of the power conversion device 10 changes with high responsiveness. It can be seen that the power conversion efficiency by the power conversion device 10 changes with high responsiveness by operating a switching frequency of the switching element 21. The responsiveness of the power conversion efficiency in the control of a switching frequency is higher than the responsiveness in the control of the on-duty of the switching element 21. Therefore, it is possible to largely change a gain of the inverter circuit 20, relative to the operation of a parameter by controlling a switching frequency. Due to the control unit 40 appropriately operating a switching frequency, while setting the on-duty in the ZVS established range Rzvs, it is possible to obtain the output power from the input power of the power conversion device 10 with high responsiveness, while implementing ZVS switching performed by the switching element 21.

### (Modified example of fourth embodiment)

In the present embodiment, the output power of the power conversion device 10 is controlled by the operation of a switching frequency of the switching element 21. However, either an output voltage or an output current of the power conversion device 10 may be controlled by the operation of a switching frequency of the switching element 21. Even if either an output voltage or an output current is controlled, the output power of the power conversion device 10 can be controlled as a result.

### (Modified examples applicable to all embodiments)

The bidirectional switch of the inverter circuit 20 is not limited to the switching element 21 having MOSFETs O1 and O2, that are two unipolar transistors of which source terminals are connected to each other, but the bidirectional switch may have two semiconductor switches. When the bidirectional switch has the two semiconductor switches, the control unit 40 changes the on-duty of a switching operation, for one semiconductor switch of the two semiconductor switches, the one semiconductor switch being according to the polarity of an input voltage of the power conversion device 10, and being switched between an ON-state and an OFF-state. The control unit 40 may further change switching frequencies of the two semiconductor switches. The bidirectional switch of the inverter circuit 20 does not necessarily have to include the two semiconductor switches. Even if the bidirectional switch does not include the two semiconductor switches, the control unit 40 may change the on-duty of a switching operation of the bidirectional switch according to the polarity of an input voltage of the power conversion device 10. The control unit 40 may further change a switching frequency of the bidirectional switch as necessary.

The above described embodiments are an example of the present invention. Therefore, the present invention is not limited to the above described embodiments, and it is needless to say that various modifications can be made in accordance with the design or the like even in other embodiments other than the above described embodiments, as long as there is no deviation from the technical idea of the present invention.

### REFERENCE SIGNS LIST

- 10: Power conversion device
- 20: Inverter circuit
- 21: Switching element (bidirectional switch)
- 22: LC resonance circuit
- 30: Rectifier circuit
- 40: Control unit
- 41: Polarity detecting unit
- 42: On-duty operation unit (average value detecting unit)
- 45: Lookup table (table)
- C2: Shunt capacitor
- IN1: First input terminal
- IN2: Second input terminal
- L1: Choke inductor
- Q1, Q2: MOSFET (semiconductor switch, unipolar transistor)
- RLoad DC: load (load)

## Claims

1. A power conversion device comprising:
a pair of input terminals to which AC power is input;
an inverter circuit that includes an LC resonance circuit and generates a high-frequency AC current from the AC power input to the pair of input terminals;
a rectifier circuit that rectifies the high-frequency AC current generated by the inverter circuit and outputs a rectified current to a load; and
a control unit that controls a switching operation of the inverter circuit, wherein
the inverter circuit includes:
a bidirectional switch that switches a direction and an on/off state of a current flowing between the pair of input terminals;
a shunt capacitor that is connected between the pair of input terminals in parallel to the bidirectional switch; and
a choke inductor that is connected between the bidirectional switch and at least one input terminal of the pair of input terminals, and
the control unit changes an on-duty of a switching operation of the bidirectional switch according to a polarity of an input voltage of the pair of input terminals.

2. The power conversion device according to claim 1, wherein
the bidirectional switch includes two semiconductor switches, and the control unit changes the on-duty of the switching operation for one semiconductor switch of the two semiconductor switches, the one semiconductor switch being according to the polarity of the input voltage, and being switched between an ON-state and an OFF-state.

3. The power conversion device according to claim 2, wherein
the two semiconductor switches are two unipolar transistors of which source terminals are connected to each other.

4. The power conversion device according to claim 1, further comprising:
a polarity detecting unit that detects the polarity of the input voltage, wherein
the control unit changes the on-duty of the switching operation of the bidirectional switch according to the polarity detected by the polarity detecting unit.

5. The power conversion device according to claim 1, wherein
the control unit reduces the on-duty of the switching operation of the bidirectional switch when a polarity of the input voltage is a negative polarity, more than the on-duty of the switching operation of the bidirectional switch when the polarity of the input voltage is a positive polarity.

6. The power conversion device according to claim 5, further comprising:
an average value detecting unit that detects an average value of the AC power input to the pair of input terminals, or the current flowing between the pair of input terminals, wherein
the control unit reduces the on-duty of the switching operation of the bidirectional switch when the polarity of the input voltage is the negative polarity, more than the on-duty of the switching operation of the bidirectional switch when the polarity of the input voltage is the positive polarity, the reduction increasing as the average value increases.

7. The power conversion device according to claim 5, further comprising:
an average value detecting unit that detects an average value of the AC power input to the pair of input terminals, or the current flowing between the pair of input terminals, wherein
when the average value is a predetermined ratio or higher, relative to a maximum rated condition of the average value, the control unit reduces the on-duty of the switching operation of the bidirectional switch when the polarity of the input voltage is the negative polarity, more than the on-duty of the switching operation of the bidirectional switch when the polarity of the input voltage is the positive polarity.

8. The power conversion device according to claim 1, wherein
the control unit controls the switching operation of the bidirectional switch using an on-duty, according to the polarity of the input voltage, selected from among on-duties for each polarity specified in a table.

9. The power conversion device according to claim 1, wherein
the control unit changes a frequency of the switching operation of the bidirectional switch, and changes the current flowing between the pair of input terminals.
